# EUROPEAN PATENT APPLICATION

(11) **EP 4 811 761 A1**
(43) Date of publication of application: **23.09.2026**
(21) Application number: 25185842.9
(22) Date of filing: 27.06.2025
(51) Int. Cl.: H04N 1/00

(54) **INFORMATION PROCESSING SYSTEM, PROGRAM, AND INFORMATION PROCESSING METHOD DEFINING SELECTABLE CONTENT OF A MENU SHARED BETWEEN APPARATUSES**

(30) Priority: 17.03.2025 JP 2025042169
(71) Applicant: FUJIFILM Business Innovation Corp., Minato-ku Tokyo (JP)
(72) Inventor: NAGUMO, Jun, Yokohama-shi, Kanagawa (JP)
(74) Representative: Becker Kurig & Partner Patentanwälte mbB

(57) **Abstract**

An information processing system includes a processor mounted on an image forming apparatus using an operation screen that is formed by display of content and enables selection of plural functions, in which the processor is configured to specify, in a case where an acquisition request of the content is received in a case of the content being shared with an information processing apparatus, a transmission source of the acquisition request, and perform processing such that a function other than a function that is executable by the image forming apparatus or the information processing apparatus, serving as a display device that acquires and displays the content, is not selectable in the content to be transmitted to the transmission source of the acquisition request.

## Description

### BACKGROUND OF THE INVENTION

### (i) Field of the Invention

The present invention relates to an information processing system, a program, and an information processing method.

### (ii) Description of Related Art

There is a case where content for allowing a user to select and execute a function from a display screen is developed to be shared between a multifunctional machine and a PC. That is, with development of a user interface of the multifunctional machine and a user interface displayed by a browser on the PC as the same content, not only reduction in development man-hours but also unification of operability can be expected.

In JP2012-008805A, a technique has been proposed in which a display form is changed according to a device that displays content.

### SUMMARY OF THE INVENTION

In a case where various functions are developed to be selected from content that is shared between an image forming apparatus and an information processing apparatus, there is a possibility that the user may select a function that cannot be actually executed in a case where a function that can be used by a display device, that is, one of the image forming apparatus or the information processing apparatus, which displays the content, is displayed in a selectable manner in the other display device.

An object of the present invention is to prevent, in a case where respective apparatuses of an image forming apparatus and an information processing apparatus share content that forms an operation screen on which a function is selectable, a function other than a function that can be used in an apparatus that displays the content from being selected.

According to a first aspect of the present disclosure, there is provided an information processing system including a processor mounted on an image forming apparatus using an operation screen that is formed by display of content and enables selection of a plurality of functions, in which the processor is configured to specify, in a case where an acquisition request of the content is received in a case of the content being shared with an information processing apparatus, a transmission source of the acquisition request, and perform processing such that a function other than a function that is executable by the image forming apparatus or the information processing apparatus, serving as a display device that acquires and displays the content, is not selectable in the content to be transmitted to the transmission source of the acquisition request.

According to a second aspect of the present disclosure, there is provided the information processing system, in which at least one function of the plurality of functions may be a first function that is not executable by the information processing apparatus but is executable by the image forming apparatus, or a second function that is not executable by the image forming apparatus but is executable by the information processing apparatus.

According to a third aspect of the present disclosure, there is provided the information processing system, in which the content may include an alternative symbol associated with the at least one function, and the processor may be configured to replace the alternative symbol with, according to the display device, a description for executing the first function or a description for executing the second function and then transmit the content to the display device.

According to a fourth aspect of the present disclosure, there is provided the information processing system, in which the processor may be configured to, in a case where the at least one function is selected by a user, cause the display device to execute the first function or the second function that is executable by the display device.

According to a fifth aspect of the present disclosure, there is provided the information processing system, in which the processor may be configured to discriminate whether the display device is the image forming apparatus or the information processing apparatus by referring to information acquired from the display device.

According to a sixth aspect of the present disclosure, there is provided the information processing system, in which the processor may be configured to, in a case where a network address, as the information acquired from the display device, is a local loopback address in a case of the content being stored in the image forming apparatus, specify the display device as the image forming apparatus.

According to a seventh aspect of the present disclosure, there is provided the information processing system, in which the processor may be configured to, in a case where a name of a browser displaying the content, as the information acquired from the display device, matches a name of a browser used by the image forming apparatus, specify the display device as the image forming apparatus.

According to an eighth aspect of the present disclosure, there is provided the information processing system, in which the processor may be configured to, in a case where the information processing apparatus, serving as the display device, is located near the image forming apparatus, transmit a description in which a function that is executable by the image forming apparatus is selectable in a state of being included in the content, to the information processing apparatus.

According to a ninth aspect of the present disclosure, there is provided a program for causing a computer mounted on an image forming apparatus using an operation screen that is formed by display of content and enables selection of a plurality of functions to realize a process including a function of specifying, in a case where an acquisition request of the content is received in a case of the content being shared with an information processing apparatus, a transmission source of the acquisition request, and a function of performing processing such that a function other than a function that is executable by the image forming apparatus or the information processing apparatus, serving as a display device that acquires and displays the content, is not selectable in the content to be transmitted to the transmission source of the acquisition request.
According to a tenth aspect of the present disclosure, there is provided an information processing method including specifying, in a case where an acquisition request of content is received in a case of the content being shared with an information processing apparatus, a transmission source of the acquisition request, and performing processing such that a function other than a function that is executable by an image forming apparatus or the information processing apparatus, serving as a display device that acquires and displays the content, is not selectable in the content to be transmitted to the transmission source of the acquisition request.

According to the first aspect of the present disclosure, in a case where respective apparatuses of the image forming apparatus and the information processing apparatus share the content that forms the operation screen of the image forming apparatus, only the function that can be used in the apparatus that displays the content is selectable from the operation screen.

According to the second aspect of the present disclosure, the first function in the information processing apparatus and the second function in the image forming apparatus can be displayed not to be selected, respectively.

According to the third aspect of the present disclosure, edition can be made to obtain the content in which only the function that is executable by the display device is selectable, and then the edited content can be transmitted to the display device.

According to the fourth aspect of the present disclosure, the first function or the second function that is executable by the display device can be activated in response to the user's selection from the operation screen displayed on the display device.

According to the fifth aspect of the present disclosure, whether the display device is the image forming apparatus or the information processing apparatus can be discriminated based on information unique to the display device.

According to the sixth aspect of the present disclosure, the display device can be specified by referring to the network address.

According to the seventh aspect of the present disclosure, the display device can be specified by referring to a unique browser name.

According to the eighth aspect of the present disclosure, in a case where the user of the information processing apparatus is at a position where the image forming apparatus can be used, the content itself in which the function that is executable only by the image forming apparatus is selectable can be transmitted to the information processing apparatus.

According to the ninth aspect of the present disclosure, in a case where respective apparatuses of the image forming apparatus and the information processing apparatus share the content that forms the operation screen of the image forming apparatus, only the function that can be used in the apparatus that displays the content is selectable from the operation screen.

According to the tenth aspect of the present disclosure, in a case where respective apparatuses of the image forming apparatus and the information processing apparatus share the content that forms the operation screen of the image forming apparatus, only the function that can be used in the apparatus that displays the content is selectable from the operation screen.

### BRIEF DESCRIPTION OF THE DRAWINGS

Exemplary embodiment(s) of the present invention will be described in detail based on the following figures, wherein:
Fig. 1 is a system configuration diagram showing a network system according to Exemplary Embodiment 1;
Fig. 2 is a configuration diagram showing an example of a multifunctional machine according to Exemplary Embodiment 1;
Fig. 3 is a conceptual diagram showing a difference in display contents in a case where the same content is displayed on the multifunctional machine and a PC according to Exemplary Embodiment 1;
Fig. 4 is a flowchart showing function execution control processing according to Exemplary Embodiment 1;
Fig. 5 is a flowchart showing acquisition request source discrimination processing according to Exemplary Embodiment 1;

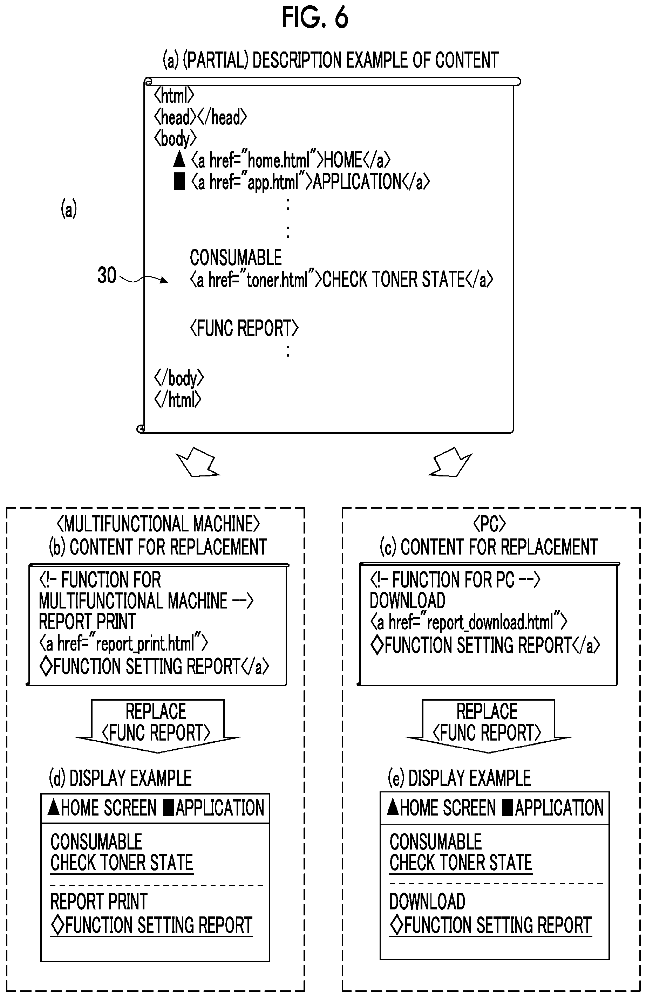

Fig. 6 is a diagram showing a transition of converting content to be transmitted into content of an acquisition request source according to Exemplary Embodiment 1, in which a part (a) in Fig. 6 is an example of the content to be transmitted, a part (b) in Fig. 6 is an example of content for replacement for the multifunctional machine, a part (c) in Fig. 6 is an example of the content for replacement for the PC, a part (d) in Fig. 6 is a display example of content after replacement in the content for replacement for the multifunctional machine, and a part (e) in Fig. 6 is a display example of the content after replacement in the content for replacement for the PC;
Fig. 7 is a table showing an example of a special tag according to Exemplary Embodiment 1;
Fig. 8 is a flowchart showing another piece of acquisition request source discrimination processing according to Exemplary Embodiment 1; and
Fig. 9 is a flowchart showing function execution control processing according to Exemplary Embodiment 2.

### DETAILED DESCRIPTION OF THE INVENTION

Hereinafter, exemplary embodiments of the present invention will be described based on drawings.

### Exemplary Embodiment 1.

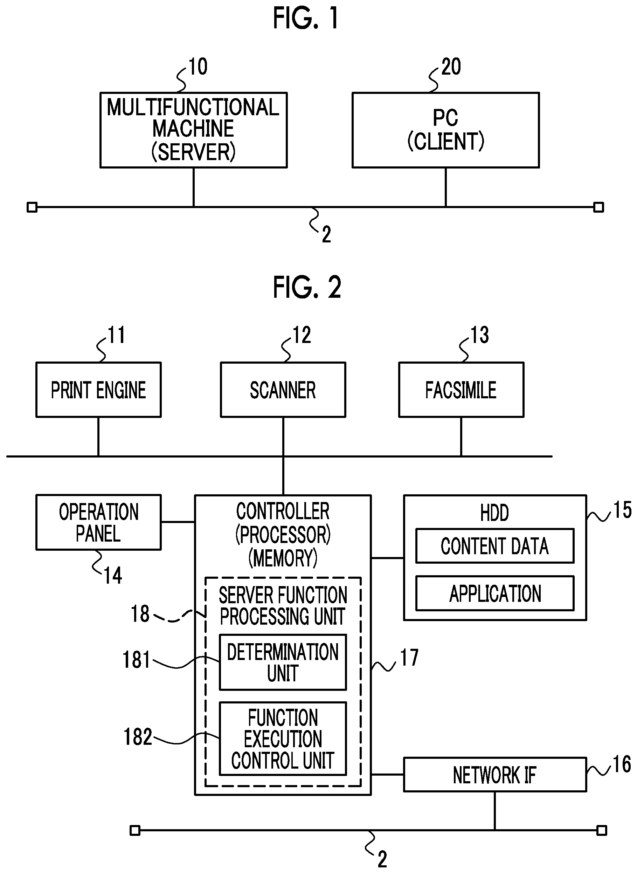

Fig. 1 is a system configuration diagram showing a network system in the present exemplary embodiment. The network system is configured by connecting a multifunctional machine 10 and a personal computer (PC) 20 to a network 2 such as a local area network (LAN). In a case where the multifunctional machine 10 and the PC 20 can perform bidirectional data communication, the network 2 may be constructed on the Internet, or may be constructed by combining a plurality of types of networks such as the LAN and the Internet. Further, the network 2 may be formed by at least one of a wired network or a wireless network.

The multifunctional machine 10 in the present exemplary embodiment has a function as a web server (hereinafter referred to as "server function") and has a function as a client using content provided by the server function. The PC 20 has a function as a client using the server function of the multifunctional machine 10. The client is required to be installed with a web browser, and have a function of displaying the content on display means, such as a display, to be mounted. Thus, the PC 20 may not be used, and for example, a tablet terminal or the like may be used.

The content is displayed by interpretation of a web page written in a hyper text markup language (HTML) language by the web browser. The content in the present exemplary embodiment is shared between the multifunctional machine 10 and the PC 20. In the multifunctional machine 10, an operation screen is formed that is displayed on an operation panel 14 and enables selection of one or a plurality of functions. In the PC 20, an operation screen is formed that is displayed on the display means, such as a display, (hereinafter referred to as "display") and enables selection of one or a plurality of functions.

Fig. 2 is a configuration diagram showing an example of the multifunctional machine 10 in the present exemplary embodiment. The multifunctional machine 10 is one form of an image forming apparatus having various functions such as a print function, a copy function, and a scanner function, and is an apparatus with a built-in computer. The multifunctional machine 10 includes a print engine 11, a scanner 12, a facsimile 13, the operation panel 14 as a user interface, a hard disk drive (HDD) 15 as a memory, a network interface (IF) 16 as communication means, and a controller 17. The controller 17 corresponds to a computer, and has a processor, a ROM, and a RAM, which are not shown.

The controller 17 realizes the server function by a cooperative operation between a processor and an application that operates on the processor. A server function processing unit 18 shown in Fig. 2 provides the server function. The server function processing unit 18 includes a determination unit 181 and a function execution control unit 182. The determination unit 181 determines whether a transmission request source of the content is the multifunctional machine 10 or the PC 20. Since the transmission request source of the content requests transmission of the content to acquire the content, the transmission request source and an acquisition request source of the content are the same apparatus.

The function execution control unit 182 controls execution of a function selected, to be executed, from the operation screen displayed by a provision destination of the content (that is, "acquisition request source"). An application that realizes the server function processing unit 18 and the content handled by the application in the present exemplary embodiment are stored in the HDD 15.

The PC 20 according to the present exemplary embodiment can be formed by a general-purpose hardware configuration that is already present. That is, the PC 20 has a user interface including a processor, a memory such as a ROM, a RAM, or an HDD, a network interface, input means such as a mouse or a keyboard, and display means such as a display.

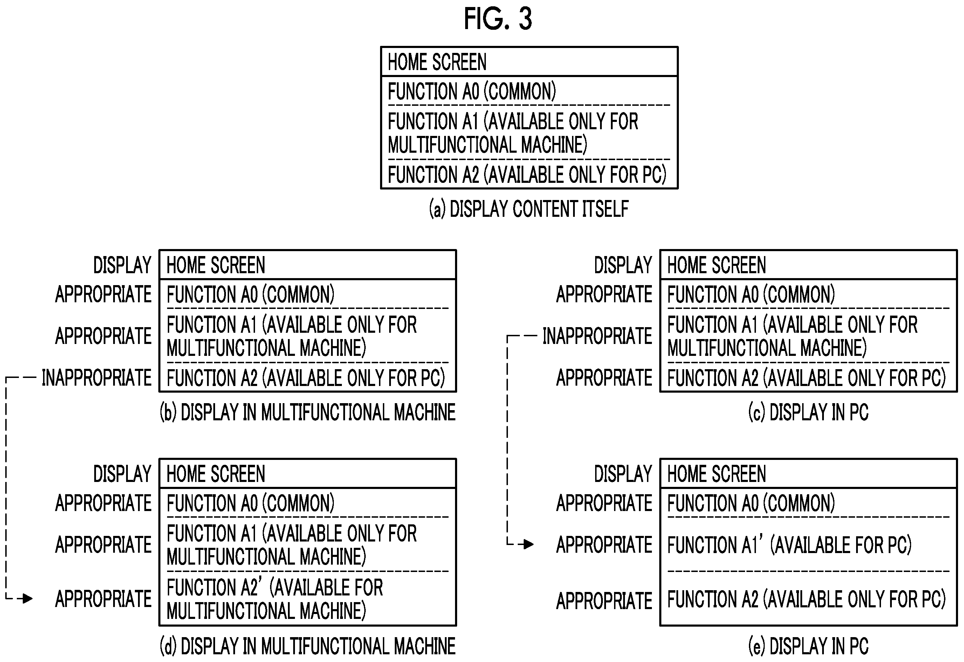

Fig. 3 is a conceptual diagram showing a difference in display contents in a case where content shared in the present exemplary embodiment is displayed on the multifunctional machine 10 and the PC 20. Hereinafter, display of a characteristic content in the present exemplary embodiment will be described with reference to Fig. 3.

A part (a) in Fig. 3 shows a display example in a case where content itself is displayed according to description contents of the content in the web browser. In this content, three functions A0, A1, and A2 are displayed in a selectable manner. The function A0, among the functions, can be executed by both the multifunctional machine 10 and the PC 20. The function A1 can be executed only by the multifunctional machine 10. For example, the print function and the facsimile function can be executed by the multifunctional machine 10, but cannot be executed by the PC 20 since the PC 20 does not have the print engine 11 or the facsimile 13 as in the multifunctional machine 10. For this reason, in general, the multifunctional machine 10 is requested to execute the function processing. The function A2 can be executed only by the PC 20. For example, the multifunctional machine 10 can print a file, but cannot perform downloading.

Parts (b) and (c) in Fig. 3 show display examples in a case where the content is displayed on the multifunctional machine 10 and the PC 20, respectively. The display example itself is the same as that in the part (a) in Fig. 3. The parts (b) and (c) in Fig. 3 show propriety of the display of the content. That is, as shown in the part (b) in Fig. 3, the function A2 that is executable only by the PC 20 is displayed in a selectable manner, on the operation panel 14 of the multifunctional machine 10. The function A2 that cannot be executed in the multifunctional machine 10 is inappropriate to be displayed in a selectable manner. The functions A0 and A1 are appropriate since the functions A0 and A1 can be executed in the multifunctional machine 10.

Similarly, as shown in the part (c) in Fig. 3, the function A1 that is executable only by the multifunctional machine 10 is displayed in a selectable manner, on the display of the PC 20. The function A1 that cannot be executed in the PC 20 is inappropriate to be displayed in a selectable manner. The functions A0 and A2 are appropriate since the functions A0 and A2 can be executed in the PC 20.

In the present exemplary embodiment, such inappropriate display can be avoided. That is, as shown in a part (d) in Fig. 3, the function A2 that is executable only by the PC 20 is replaced with A2' that is executable in the multifunctional machine 10, and the function A2' is displayed on the operation panel 14 of the multifunctional machine 10. Accordingly, on the operation panel 14, only the functions executable in the multifunctional machine 10 are displayed in a selectable manner, and the function other than the functions executable in the multifunctional machine 10 is not displayed. Further, as shown in a part (e) in Fig. 3, the function A1 that is executable only by the multifunctional machine 10 is replaced with A1' that is executable in the PC 20, and the function A1' is displayed on the display of the PC 20. Accordingly, on the display, only the functions executable in the PC 20 are displayed in a selectable manner, and the function other than the functions executable in the multifunctional machine 10 is not displayed.

As described above, in the present exemplary embodiment, with the partial replacement of the description contents of the content, the content can be provided with a user interface that is appropriate for the multifunctional machine 10 or the PC 20. More specifically, in the present exemplary embodiment, the processing is performed such that the function other than the function that is executable by the multifunctional machine 10 or the PC 20, serving as a display device that acquires and displays the content, is not selectable, in other words, only the function that is executable by the multifunctional machine 10 or the PC 20, serving as the display device that acquires and displays the content, is selectable.

Next, a specific operation in the present exemplary embodiment will be described.

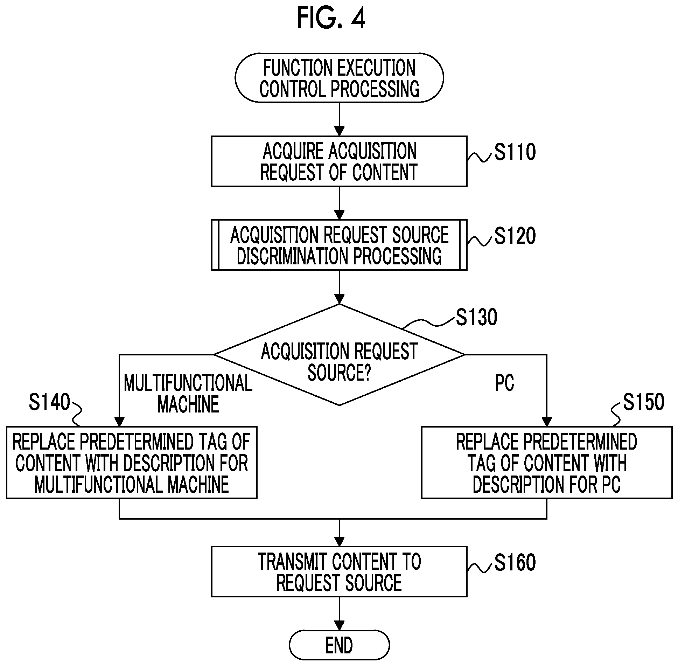

The multifunctional machine 10 that functions as a server causes the server function processing unit 18 to transmit the content to the acquisition request source in response to an acquisition request of the content. As described above, the functions in the content are selectable, and the selected function is executed. Hereinafter, function execution control processing in the server function processing unit 18 that provides the server function will be described with reference to a flowchart shown in Fig. 4.

In a case where the acquisition request of the content is transmitted, the server function processing unit 18 acquires the acquisition request (step S110).

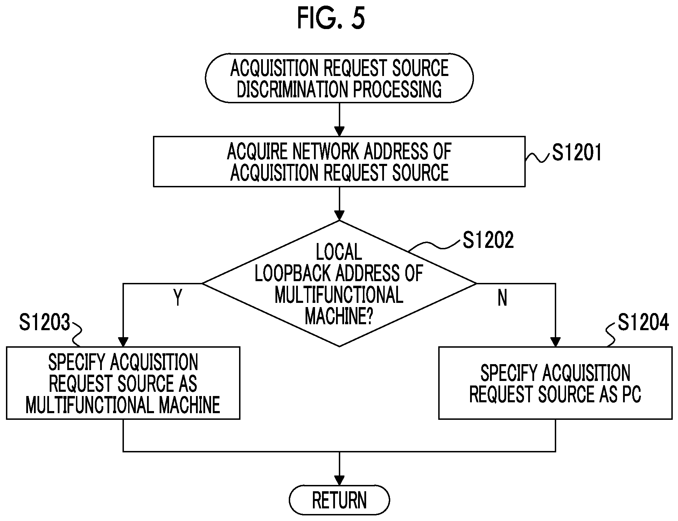

Incidentally, since the acquisition request source in the present exemplary embodiment is the multifunctional machine 10 or the PC 20, which functions as the client, the server function processing unit 18 discriminates which is the acquisition request source (step S120). Processing in the determination unit 181 that automatically discriminates the acquisition request source will be described with reference to a flowchart shown in Fig. 5.

The determination unit 181 acquires a network address of the acquisition request source, which is included in acquisition request data acquired from the acquisition request source (step S1201). Then, checking is made whether or not the network address is a local loopback address. The "local loopback address" is an IP address that always refers to itself. In a case of the present exemplary embodiment, in the multifunctional machine 10 functioning as the server, the local loopback address is assigned to the network address from the multifunctional machine 10, which functions as the client, serving as a transmission source of the acquisition request.

In a case where the network address is the local loopback address (Y in step S1202), the acquisition request source can be specified as the multifunctional machine 10 as described above (step S1203). On the other hand, in a case where the network address is not the local loopback address (N in step S1202), the acquisition request source can be specified as an apparatus other than the multifunctional machine 10, that is, the PC 20 in a case of the present exemplary embodiment (step S1204).

A part (a) in Fig. 6 is a diagram showing a description example of a part of the content in the present exemplary embodiment. In the present exemplary embodiment, a special tag is prepared and described in the content. In the part (a) in Fig. 6, a tag 30 of <FUNC REPORT> is described at a predetermined position, as an example of the special tag.

The function execution control unit 182 reads out the content to be transmitted from the HDD 15, and checks whether or not the content has the special tag before transmission. In the present exemplary embodiment, the special tag will be described as being included in the content. Further, as illustrated in the part (a) in Fig. 6, a case where the tag 30 of <FUNC REPORT> is described will be described as an example.

In a case where the acquisition request source of the content is the multifunctional machine 10 ("multifunctional machine" in step S130), the function execution control unit 182 reads out, from the HDD 15, and acquires the content for replacement for the multifunctional machine 10. A part (b) in Fig. 6 shows an example of the content for replacement. The function execution control unit 182 replaces the tag 30 included in the content shown in the part (a) in Fig. 6 with the acquired content (step S140). In this manner, the function execution control unit 182 updates the content to be transmitted shown in the part (a) in Fig. 6 to the content for the multifunctional machine 10, in response to the acquisition request from the multifunctional machine 10, and then transmits the updated content to the multifunctional machine 10 as the acquisition request source (step S160). The transmission to the multifunctional machine 10 as the acquisition request source means that the function execution control unit 182, which provides the server function, transmits the content to the multifunctional machine 10 that operates as the client. In a case where the content is transmitted to the multifunctional machine 10, the browser installed in the multifunctional machine 10 acquires the content and displays the content on the operation panel 14.

In a case where the acquisition request source of the content is the PC 20 ("PC" in step S130), the function execution control unit 182 reads out, from the HDD 15, and acquires the content for replacement for the PC 20. A part (c) in Fig. 6 shows an example of the content for replacement. The function execution control unit 182 replaces the tag 30 included in the content shown in the part (a) in Fig. 6 with the acquired content (step S150). In this manner, the function execution control unit 182 updates the content to be transmitted shown in the part (a) in Fig. 6 to the content for the PC 20, in response to the acquisition request from the PC 20, and then transmits the updated content to the PC 20 as the acquisition request source (step S160). In a case where the content is transmitted to the PC 20, the browser installed in the PC 20 acquires the content and displays the content on the display.

A part (d) in Fig. 6 shows an example of the user interface displayed on the operation panel 14. Further, a part (e) in Fig. 6 shows an example of the user interface displayed on the display of the PC 20. In the display example of each interface, "consumable check toner state" is a function corresponding to the function A0 in Fig. 3, and is a function executable in both the multifunctional machine 10 and the PC 20. Thus, the display may be performed on each display unit without using the special tag. In a case where both the operation panel 14 of the multifunctional machine 10 and the display of the PC 20 are referred to, both are collectively referred to as "display unit". The multifunctional machine 10 and the PC 20 each can also be said to be the display devices having the display unit.

Further, "report print function setting report" shown in the part (d) in Fig. 6 is a function corresponding to the function A1 in Fig. 3, and is a first function that cannot be executed by the PC 20 but can be executed by the multifunctional machine 10. On the other hand, "download function setting report" shown in the part (e) in Fig. 6 is a function corresponding to the function A2 in Fig. 3, and is a second function that cannot be executed by the multifunctional machine 10 but can be executed by the PC 20. In other words, the interface displayed on the multifunctional machine 10 is displayed such that the print function, which can be executed in the multifunctional machine 10, is selectable and the function of downloading, which cannot be executed in the multifunctional machine 10, is not selectable. Similarly, the interface displayed on the PC 20 is displayed such that the function of downloading, which can be executed in the PC 20, is selectable and the print function, which cannot be executed in the PC 20, is not selectable.

In the parts (d) and (e) in Fig. 6, a hyperlink is inserted in a character string portion underlined such as "function setting report", and the user performs a selection operation on the hyperlink to execute the corresponding function.

Incidentally, both the function of printing the function setting report in the multifunctional machine 10 and the function of downloading the function setting report in the PC 20 are functions related to the function setting report. That is, the user can select the function that is related to both the multifunctional machine 10 and the PC 20 and is executable by the multifunctional machine 10 and the PC 20, respectively.

According to the present exemplary embodiment, as described above, the special tag included in the content shown in the part (a) in Fig. 6, that is, the shared content can be replaced with the description of the content for replacement, which is appropriate for the acquisition request source of the content, and then can be transmitted to the acquisition request source of the content.

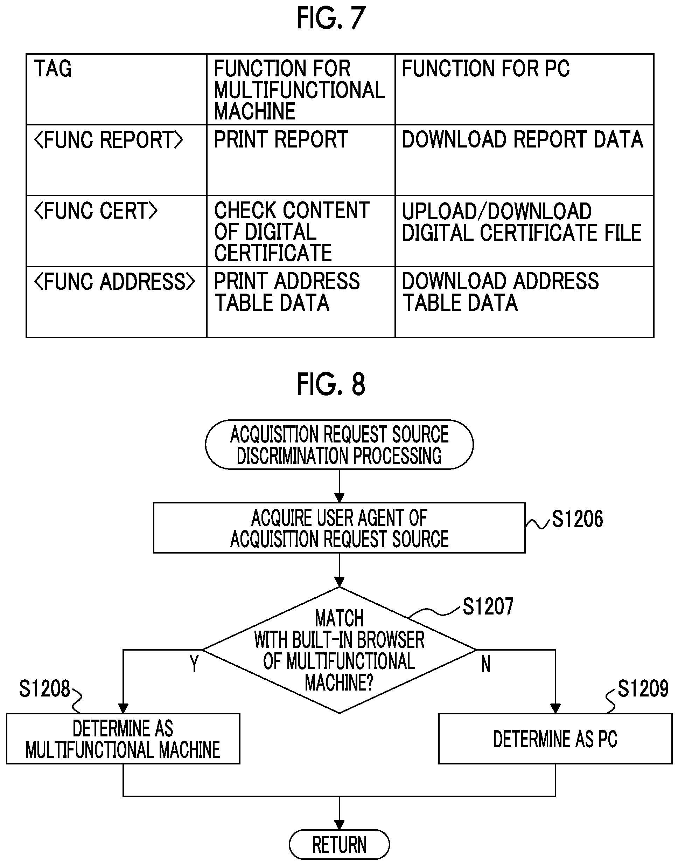

Fig. 7 is a diagram showing an example of the special tag in a table format in the present exemplary embodiment. In the above description, a case where <FUNC REPORT>, among the special tags, is set in the content has been described as an example. Of course, the content may include other tags or a plurality of tags. In Fig. 7, a function for multifunctional machine and a function for PC are in correspondence with the special tag. The function for multifunctional machine corresponds to the first function described above, and the function for PC corresponds to the second function described above. The special tag is an alternative symbol associated with the first function and the second function. The special tag included in the shared content is replaced with the associated first function or second function, and thus the function becomes selectable. In the table shown in Fig. 7, for convenience of description, character strings describing the functions are set, but actually, information indicating the content for replacement corresponding to the function illustrated in parts (b) and (c) in Fig. 6 or a storage destination of the content for replacement is set. The function execution control unit 182 determines whether or not the content to be transmitted includes the special tag, with reference to the table shown in Fig. 7.

Fig. 8 is a flowchart showing another piece of processing of discriminating the acquisition request source in the determination unit 181. In the above description, the acquisition request source of the content is automatically discriminated with reference to the network address included in the acquisition request data, which is the information acquired from the acquisition request source. However, in the example shown in Fig. 8, a user agent is acquired instead of the network address. The "user agent" refers to an operating system (OS) or a browser used by a network user. In a case where a site or the like is accessed using a general browser based on hyper text transfer protocol (HTTP), a mechanism is provided in which a counterpart is notified of various types of information related to the user agent. That is, the acquisition request source issues the notification by including a name of the browser in the information related to the user agent. A special browser is used as the browser in the multifunctional machine 10, and thus a name of the browser in the multifunctional machine 10 is usually different from a name of the PC 20 using a general browser.

Thus, in a case where the acquisition request of the content is transmitted, the determination unit 181 acquires the user agent of the acquisition request source with reference to the acquisition request data (step S1206).

In a case where the user agent (that is, browser name) is the name of the browser built in the multifunctional machine 10 (Y in step S1207), the acquisition request source can be determined as the multifunctional machine 10 (step S1208). On the other hand, in a case where the user agent is not the name of the browser built in the multifunctional machine 10 (N in step S1207), the acquisition request source can be determined as an apparatus other than the multifunctional machine 10, that is, the PC 20 in a case of the present exemplary embodiment (step S1209).

In a case where the determination unit 181 discriminates the acquisition request source of the content as described above, the function execution control unit 182 operates the existing content according to a discriminated destination as follows.

In the present exemplary embodiment, the special tag is prepared in advance, and the special tag included in the content is replaced with the content for replacement corresponding to the display device of the acquisition request source of the content to cause only the function executable in each display device to be selectable. However, the special tag may not necessarily be used.

For example, content in which only the functions executable by any display device, for example, the multifunctional machine 10 are selectable, that is, so-called the content for the multifunctional machine 10 is created in advance as the content to be transmitted. However, the description related to the function that is executable by the multifunctional machine 10 (content shown in part (b) in Fig. 6) is designated as a description to be replaced. In a case where the PC 20 requests the acquisition of the content, the function execution control unit 182 replaces the description to be replaced with the content for replacement for the PC 20 shown in the part (c) in Fig. 6. In a case where the multifunctional machine 10 requests the acquisition of the content, the function execution control unit 182 may transmit the content to be transmitted itself to the multifunctional machine 10 without editing the content. Of course, on the contrary, the content for the PC 20 may be created in advance as the content to be transmitted. In this case, in a case where the multifunctional machine 10 requests the acquisition of the content, the function execution control unit 182 replaces the description to be replaced (content shown in part (c) in Fig. 6) with the content for replacement shown in the part (b) in Fig. 6.

In the above description, in a case where the user operates the PC 20 to cause the PC 20 to display the content, the user can select, as a function related to the function setting report, the download function of report data that is executable by the PC 20, but the user cannot select the report print function that cannot be executed by the PC 20. However, in a case where the information processing apparatus used by the user is a portable PC 20 or a portable terminal such as a tablet terminal, the user may approach the multifunctional machine 10 to operate the portable PC 20 or the portable terminal. In a case where the user is located near the multifunctional machine 10, a printed matter may be taken out from the multifunctional machine 10 immediately even in a case where the report print function is selected from the PC 20. Therefore, there may be no problem in handling the same as the function selection from the operation panel 14 of the multifunctional machine 10.

In a case where the acquisition request source of the content is the PC 20 in Fig. 4 ("PC" in step S130), the tag 30 included in the content shown in the part (a) in Fig. 6 may be processed to be replaced with at least one of the content for replacement for the multifunctional machine 10 or the content for replacement for the PC 20. The operation of the PC 20 near the multifunctional machine 10 can be assumed that the report print is wanted to be performed, and thus the tag 30 is replaced with the content for replacement for the multifunctional machine 10. Further, since the operation is performed on the PC 20 regardless of where the user operates the PC 20, the tag 30 is replaced with the content for replacement for the PC 20. Alternatively, the tag 30 may be replaced with both of the content for replacement for the multifunctional machine 10 and the content for replacement for the PC 20 to allow the user to select any function.

In this manner, even in a case where the acquisition request source of the content is the PC 20, in a case where the PC 20 is located near the multifunctional machine 10, the content may be transmitted to the PC 20 in a state of including a description in which the function that is executable by the multifunctional machine 10 is selectable, without completely excluding, from the content, the function other than the function that is executable by the PC 20.

In a case where the PC 20 used by the user is equipped with short-range wireless communication means such as Wi-Fi Direct (registered trademark), Bluetooth (registered trademark), or Bluetooth Low Energy (BLE), the multifunctional machine 10 can detect the PC 20 located near the multifunctional machine 10 by mounting short-range wireless communication means complying with the PC 20 and setting a threshold value related to a distance for determining that the PC 20 is located near the multifunctional machine 10, on the hardware configuration shown in Fig. 2. Alternatively, a human sensor may be used.

### Exemplary Embodiment 2.

In the above Exemplary Embodiment 1, with the replacement of the special tag included in the content to be transmitted with the content for replacement, the function that is not selectable in a case where the content is displayed is not displayed. In the present exemplary embodiment, instead of the change in the content itself, for the function selected by the user, the display device, serving as a display destination of the content, that is, the multifunctional machine 10 or the PC 20 selects the function to be executed.

A system configuration in the present exemplary embodiment may be the same as the system configuration in Exemplary Embodiment 1, and processing executed by the function execution control unit 182 is different from the processing in Exemplary Embodiment 1.

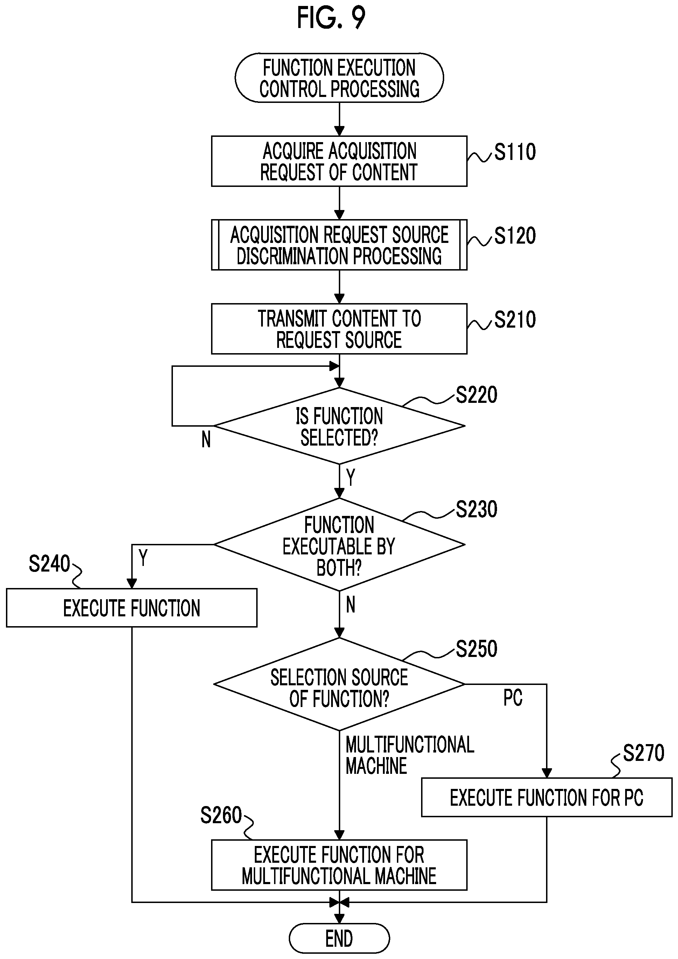

Fig. 9 is a flowchart showing function execution control processing in the present exemplary embodiment. Hereinafter, the function execution control processing in the server function processing unit 18 that provides the server function will be described with reference to the flowchart shown in Fig. 9. The same step number is assigned to the same processing as the processing in the exemplary embodiment described with reference to Fig. 4, and a description thereof will be omitted as appropriate.

In a case where the acquisition request of the content is transmitted, the server function processing unit 18 acquires the acquisition request and discriminates the acquisition request source (steps S110 and S120). Subsequently, the function execution control unit 182 transmits the content to be transmitted to the acquisition request source (step S210).

The content to be transmitted may include at least one of the function that is executable only by the multifunctional machine 10 or the function that is executable only by the PC 20. However, in the present exemplary embodiment, the content is transmitted to the content acquisition request source with the description contents itself. In the display examples shown in the part (d) in Fig. 6 or the part (e) in Fig. 6, the function is displayed with an added function name that is selectable, such as "report print" or "download". In the present exemplary embodiment, since the content is transmitted regardless of the acquisition request source, the function name itself that is not selectable in appearance is displayed in any display device, such as "report print" or "download". In order to avoid the above, the function names may be simply displayed as "function setting report" without being displayed. The description of the content to be transmitted will be described below.

The function execution control unit 182 is in a standby state until the function is selected from a transmission destination of the content (N in step S220). In a case where the function is selected by the user (Y in step S220), a type of the function is specified. In a case where the selected function is "consumable check toner state" in the display example shown in Fig. 6, this function corresponds to the function A0 in Fig. 3 and can be executed in both the multifunctional machine 10 and the PC 20 (Y in step S230). Therefore, the function execution control unit 182 performs control such that the function is executed (step S240).

Further, in a case where the selected function is the function setting report, there is a need to execute the function for the multifunctional machine 10 or the function for the PC 20. The function selection source is the same as the acquisition request source specified in step S120. Thus, in a case where the function selection source is the multifunctional machine 10 ("multifunctional machine" in step S250), the function execution control unit 182 executes the function setting report for the multifunctional machine 10, that is, the function for the multifunctional machine 10 associated with the content for replacement illustrated in the part (b) in Fig. 6 (step S260). On the other hand, in a case where the function selection source is the PC 20 ("PC" in step S250), the function execution control unit 182 executes the function setting report for the PC 20, that is, the function for the PC 20 associated with the content for replacement illustrated in the part (c) in Fig. 6 (step S270).

In the present exemplary embodiment, instead of the edition of the content itself, the function to be executed is specified based on the display destination of the content (corresponding to "function selection source" described above).

As is clear from the above, in a case of the function of the "function setting report" illustrated in Fig. 6, the content may be created for the multifunctional machine 10 or for the PC 20. In a case where the content to be transmitted is created for the multifunctional machine 10, "report print function setting report" is also displayed on the PC 20. However, even in a case where the above function is selected in the PC 20, the function actually executed is the function for the PC 20, that is, the download of the report data. On the other hand, in a case where the content to be transmitted is created for the PC 20, "download function setting report" is also displayed on the multifunctional machine 10. However, even in a case where the above function is selected in the multifunctional machine 10, the function actually executed is the function for the multifunctional machine 10, that is, the report print.

As described above, the content to be transmitted may be created such that "function setting report" can be simply selected without clearly indicating the function name such as "report print" or "download". In this case, in a case where the user selects "function setting report", the function execution control unit 182 executes the function of printing the report in a case where the user selection is made by the operation of the multifunctional machine 10, and executes the function of downloading the report data in a case where the user selection is made by the operation of the PC 20.

In a case where the PC 20 is located near the multifunctional machine 10 as described in Exemplary Embodiment 1, the modification example in which the content is transmitted to the PC 20 in a state of including the description in which the function that is executable by the multifunctional machine 10 is selectable can also be employed in the present exemplary embodiment. In a case of the present exemplary embodiment, in a case where the PC 20 is located near the multifunctional machine 10, the report print function that is executable by the multifunctional machine 10 may be executed.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit

(GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

The present invention can be employed for a program and a program product.

### (Supplementary Note)

### (((1)))

An information processing system comprising:
a processor mounted on an image forming apparatus using an operation screen that is formed by display of content and enables selection of a plurality of functions, wherein the processor is configured to:
specify, in a case where an acquisition request of the content is received in a case of the content being shared with an information processing apparatus, a transmission source of the acquisition request; and
perform processing such that a function other than a function that is executable by the image forming apparatus or the information processing apparatus, serving as a display device that acquires and displays the content, is not selectable in the content to be transmitted to the transmission source of the acquisition request.

### (((2)))

The information processing system according to (((1))),
wherein at least one function of the plurality of functions is a first function that is not executable by the information processing apparatus but is executable by the image forming apparatus, or a second function that is not executable by the image forming apparatus but is executable by the information processing apparatus.

### (((3)))

The information processing system according to (((2))),
wherein the content includes an alternative symbol associated with the at least one function, and
the processor is configured to:
   replace the alternative symbol with, according to the display device, a description for executing the first function or a description for executing the second function and then transmit the content to the display device.

### (((4)))

The information processing system according to (((2))), wherein the processor is configured to:
in a case where the at least one function is selected by a user, cause the display device to execute the first function or the second function that is executable by the display device.

### (((5)))

The information processing system according to any one of (((1))) to (((4))), wherein the processor is configured to:
discriminate whether the display device is the image forming apparatus or the information processing apparatus by referring to information acquired from the display device.

### (((6)))

The information processing system according to (((5))), wherein the processor is configured to:
in a case where a network address, as the information acquired from the display device, is a local loopback address in a case of the content being stored in the image forming apparatus, specify the display device as the image forming apparatus.

### (((7)))

The information processing system according to (((5))), wherein the processor is configured to:
in a case where a name of a browser displaying the content, as the information acquired from the display device, matches a name of a browser used by the image forming apparatus, specify the display device as the image forming apparatus.

### (((8)))

The information processing system according to any one of (((1))) to (((7))), wherein the processor is configured to:
in a case where the information processing apparatus, serving as the display device, is located near the image forming apparatus, transmit a description in which a function that is executable by the image forming apparatus is selectable in a state of being included in the content, to the information processing apparatus.

### (((9)))

A program for causing a computer mounted on an image forming apparatus using an operation screen that is formed by display of content and enables selection of a plurality of functions to realize a process comprising:
a function of specifying, in a case where an acquisition request of the content is received in a case of the content being shared with an information processing apparatus, a transmission source of the acquisition request; and
a function of performing processing such that a function other than a function that is executable by the image forming apparatus or the information processing apparatus, serving as a display device that acquires and displays the content, is not selectable in the content to be transmitted to the transmission source of the acquisition request.

According to (((1))), in a case where respective apparatuses of the image forming apparatus and the information processing apparatus share the content that forms the operation screen of the image forming apparatus, only the function that can be used in the apparatus that displays the content is selectable from the operation screen.

According to (((2))), the first function in the information processing apparatus and the second function in the image forming apparatus can be displayed not to be selected, respectively.

According to (((3))), edition can be made to obtain the content in which only the function that is executable by the display device is selectable, and then the edited content can be transmitted to the display device.

According to (((4))), the first function or the second function that is executable by the display device can be activated in response to the user's selection from the operation screen displayed on the display device.

According to (((5))), whether the display device is the image forming apparatus or the information processing apparatus can be discriminated based on information unique to the display device.

According to (((6))), the display device can be specified by referring to the network address.

According to (((7))), the display device can be specified by referring to a unique browser name.

According to (((8))), in a case where the user of the information processing apparatus is at a position where the image forming apparatus can be used, the content itself in which the function that is executable only by the image forming apparatus is selectable can be transmitted to the information processing apparatus.

According to (((9))), in a case where respective apparatuses of the image forming apparatus and the information processing apparatus share the content that forms the operation screen of the image forming apparatus, only the function that can be used in the apparatus that displays the content is selectable from the operation screen.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

- 2:: network
- 10:: multifunctional machine
- 11:: print engine
- 12:: scanner
- 13:: facsimile
- 14:: operation panel
- 15:: HDD
- 16:: network interface (IF)
- 17:: controller
- 18:: server function processing unit
- 181:: determination unit
- 182:: function execution control unit

## Claims

1. An information processing system comprising:
a processor mounted on an image forming apparatus using an operation screen that is formed by display of content and enables selection of a plurality of functions, wherein the processor is configured to:
specify, in a case where an acquisition request of the content is received in a case of the content being shared with an information processing apparatus, a transmission source of the acquisition request; and
perform processing such that a function other than a function that is executable by the image forming apparatus or the information processing apparatus, serving as a display device that acquires and displays the content, is not selectable in the content to be transmitted to the transmission source of the acquisition request.

2. The information processing system according to claim 1,
wherein at least one function of the plurality of functions is a first function that is not executable by the information processing apparatus but is executable by the image forming apparatus, or a second function that is not executable by the image forming apparatus but is executable by the information processing apparatus.

3. The information processing system according to claim 2,
wherein the content includes an alternative symbol associated with the at least one function, and
the processor is configured to:
replace the alternative symbol with, according to the display device, a description for executing the first function or a description for executing the second function and then transmit the content to the display device.

4. The information processing system according to claim 2, wherein the processor is configured to:
in a case where the at least one function is selected by a user, cause the display device to execute the first function or the second function that is executable by the display device.

5. The information processing system according to any one of claims 1 to 4, wherein the processor is configured to:
discriminate whether the display device is the image forming apparatus or the information processing apparatus by referring to information acquired from the display device.

6. The information processing system according to claim 5, wherein the processor is configured to:
in a case where a network address, as the information acquired from the display device, is a local loopback address in a case of the content being stored in the image forming apparatus, specify the display device as the image forming apparatus.

7. The information processing system according to claim 5, wherein the processor is configured to:
in a case where a name of a browser displaying the content, as the information acquired from the display device, matches a name of a browser used by the image forming apparatus, specify the display device as the image forming apparatus.

8. The information processing system according to any one of claims 1 to 7, wherein the processor is configured to:
in a case where the information processing apparatus, serving as the display device, is located near the image forming apparatus, transmit a description in which a function that is executable by the image forming apparatus is selectable in a state of being included in the content, to the information processing apparatus.

9. A program for causing a computer mounted on an image forming apparatus using an operation screen that is formed by display of content and enables selection of a plurality of functions to realize a process comprising:
a function of specifying, in a case where an acquisition request of the content is received in a case of the content being shared with an information processing apparatus, a transmission source of the acquisition request; and
a function of performing processing such that a function other than a function that is executable by the image forming apparatus or the information processing apparatus, serving as a display device that acquires and displays the content, is not selectable in the content to be transmitted to the transmission source of the acquisition request.

10. An information processing method comprising:
specifying, in a case where an acquisition request of content is received in a case of the content being shared with an information processing apparatus, a transmission source of the acquisition request; and
performing processing such that a function other than a function that is executable by an image forming apparatus or the information processing apparatus, serving as a display device that acquires and displays the content, is not selectable in the content to be transmitted to the transmission source of the acquisition request.
